# EUROPEAN PATENT APPLICATION

(11) **EP 0 637 539 A1**
(43) Date of publication of application: **08.02.1995**
(21) Application number: 94202284.9
(22) Date of filing: 08.08.1994
(51) Int. Cl.: B62D 49/06, B62D 61/00, B62D 21/06

(54) **Motor vehicle with adjustable wheel position**

(30) Priority: 06.08.1993 NL 9301370
(71) Applicant: REDEXIM HANDEL- EN EXPLOITATIE MAATSCHAPPIJ B.V., 3702 AC Zeist (NL)
(72) Inventor: Reincke, Marinus, Nl-3956 CR Leersum (NL)
(74) Representative: Bruin, Cornelis Willem

(57) **Abstract**

The invention relates to a motor vehicle (1) for propelling and/or driving agricultural implements and/or machines, comprising a frame (8), at least one coupling member (12) connected to the frame (8) for coupling of an agricultural implement and/or a machine and at least three wheels (2,3) each mounted on a shaft, wherein at least one of the shafts (4,26) is displaceable substantially in the plane defined by the shafts (4,26).

## Description

The invention relates to a motor vehicle for propelling and/or driving agricultural implements and/or machines, comprising a frame, at least one coupling member connected to the frame for coupling of an agricultural implement and/or a machine and at least three wheels each mounted on a shaft.

Such motor vehicles exist in a great diversity. A drawback to the existing motor vehicles is that the wheel pressure thereof depends partly on the position of the centre of gravity of the coupled agricultural implement or the coupled machine. It is thus for instance possible for the wheel pressure of two front wheels to be limited, while the wheel pressure of two rear wheels is very great when a particular agricultural implement is coupled to the rear of the motor vehicle. The great wheel pressure on the rear wheels can result in undesired changes to the ground.

The present invention has for its object to provide an improved motor vehicle for propelling and driving agricultural implements and/or machines, with which the wheel pressure can be influenced. It is thereby possible to distribute the total wheel pressure over the wheels such that all wheels exert a part of the total wheel pressure on the ground. The greatest wheel pressure applied to the ground is minimal when the wheel pressure of all wheels is equally great, this therefore being the ideal situation.

The present invention provides for this purpose a motor vehicle wherein at least one of the shafts is displaceable substantially in the plane defined by the shafts. Through displacement of the shaft of at least one wheel the position of the wheels can be chosen such that the force of gravity applied to the centre of gravity of the motor vehicle with an agricultural implement optionally coupled thereto and/or the coupled machine passes to the greatest possible extent through the middle of the plane through the shafts. The force of gravity will thereby be distributed as uniformly as possible over the wheels.

At least one coupling member preferably lies within the perimeter defined by the shafts. This step achieves that the centre of gravity of the motor vehicle with a coupled-on unit already lies in the vicinity of the middle of the plane through the shafts. Only a limited adjustment of at least one shaft will hereby be required for a uniform distribution of the wheel pressure.

A preferred embodiment of the motor vehicle is characterized in that two shafts are connected to the frame at a fixed position. These two shafts are preferably steerable and are preferably driven. These steps result in a relatively inexpensive construction, wherein at least one displaceable shaft can be connected to the frame in constructionally simple manner.

Another preferred embodiment of the motor vehicle is characterized in that two shafts are connectable to the frame at an adjustable position. These two shafts are preferably located mutually in line. This relatively stable construction is easy to steer.

At least one of the wheels preferably forms part of an agricultural implement connectable to the coupling member or of a machine connectable to the coupling member. The position of at least one wheel is thus dependent on the coupled unit. It hereby becomes unnecessary to change a wheel position after a unit has been coupled on. This is labour-saving. Another advantage is that the frame does not have to take a large form such that it can accommodate a shaft for all desired wheel positions.

The agricultural implement is preferably formed by a roller. In this case the agricultural implement combines the function of implement with that of a wheel.

The invention is elucidated hereinbelow with reference to the non-limitative embodiments shown in the figures, wherein:
Fig. 1 shows a partly cut away perspective view of a motor vehicle according to the invention with two fixed and two displaceable wheels,
Fig. 2 is a perspective view of the motor vehicle of fig. 1 wherein the displaceable wheels are disconnected,
Fig. 3-6 show perspective views of a number of agricultural implements which can be coupled to the rear of the motor vehicle of fig. 1,
Fig. 7 shows a perspective view of an agricultural implement which can be coupled to the front of the motor vehicle of fig. 1, wherein the two displaceable wheels of fig. 1 are replaced by a wheel forming part of the agricultural implement, and
Fig. 8-10 show three side views of a number of assemblies of a motor vehicle according to the invention with different coupled-on agricultural implements.

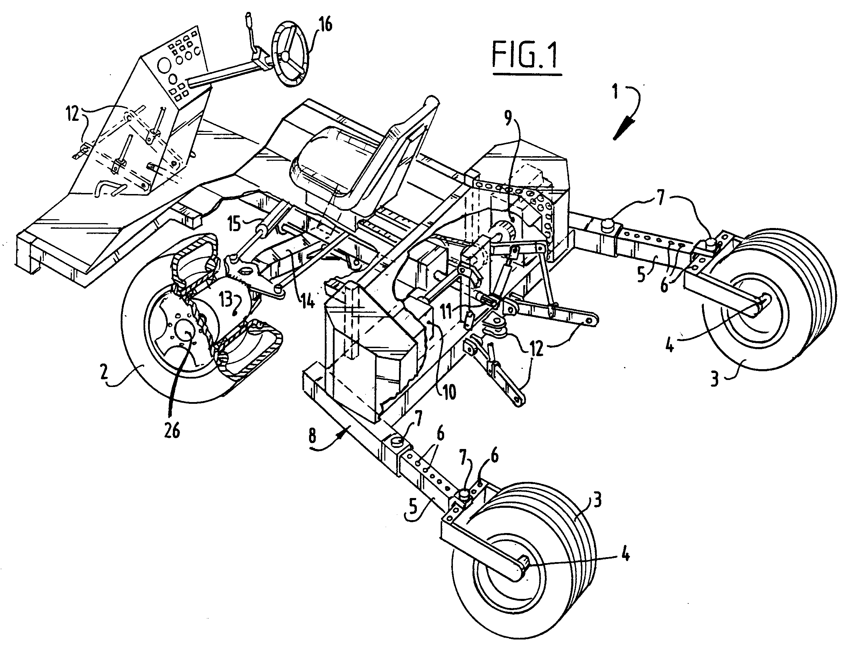

Fig. 1 shows a motor vehicle 1 with two fixed wheels 2 and two displaceable wheels 3. The shafts 4 of the displaceable wheels 3 are connected to tubular constructions 5 provided with adjusting openings 6 whereby, using pins 7, the wheels 3 are connectable to a frame 8 at an adjustable position. A motor 9 connected to frame 8 drives a hydraulic pump 10 and two power take-off shafts 11. The latter are placed close to coupling members 12 on the front and rear of motor vehicle 1. The hydraulic pump 10 drives the fixed wheels 2 by means of hydraulic motors 13 placed in the fixed wheels 2. The shafts 26 of the fixed wheels 2 are mutually connected by a rigid connecting shaft 14 which is pivotally connected to frame 8. The fixed wheels 2 are steerable by a steering wheel 16 with interposing of a control cylinder 15.

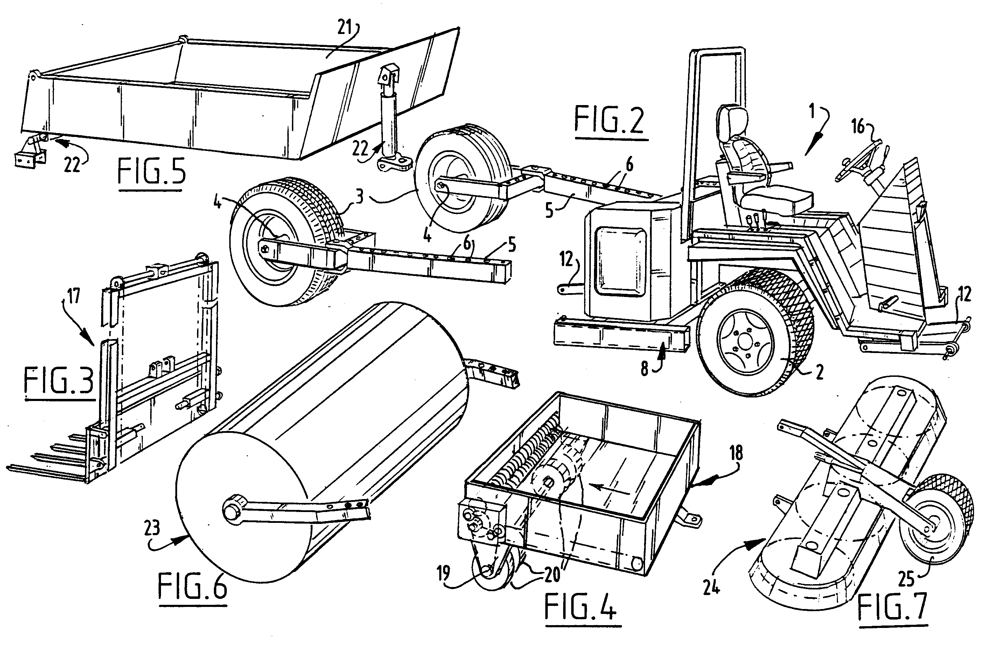

Fig. 2 shows the same motor vehicle 1, wherein the displaceable wheels 3 and the tubular constructions 5 are detached from the frame 7. When a lifting device 17 shown in fig. 3 is coupled to the rear of the motor vehicle the displaceable wheels 3 are connected to the frame 7 such that the motor vehicle has a relatively short wheel base. When a clod-breaker 18 as shown in fig. 4 is coupled to motor vehicle 1 the displaceable wheels 3 will be placed such that the shafts 4 of wheels 3 are situated above the shafts 19 of the wheels 20 of clod-breaker 18.

When a trailer 21 with a tipping device 22 as shown in fig. 5 is coupled on, the wheels 3 will be placed such that the wheel base is relatively long.

It is also possible to couple a pressure roller 23 as shown in fig. 6 to the frame 7. The wheels 3 are then superfluous because the pressure roller 23 fulfills the function of the wheels 3.

Yet another assembly is obtained, as shown in fig. 7, when a mowing device 24 is coupled to the coupling member 12 at the front of motor vehicle 1. The centre of gravity of the assembly is now shifted forward such that an additional support is desired on the front side of motor vehicle 1. The displaceable wheels 3 are unnecessary at the rear. The mowing device 24 is provided with a wheel 25 which now assumes the role of displaceable support.

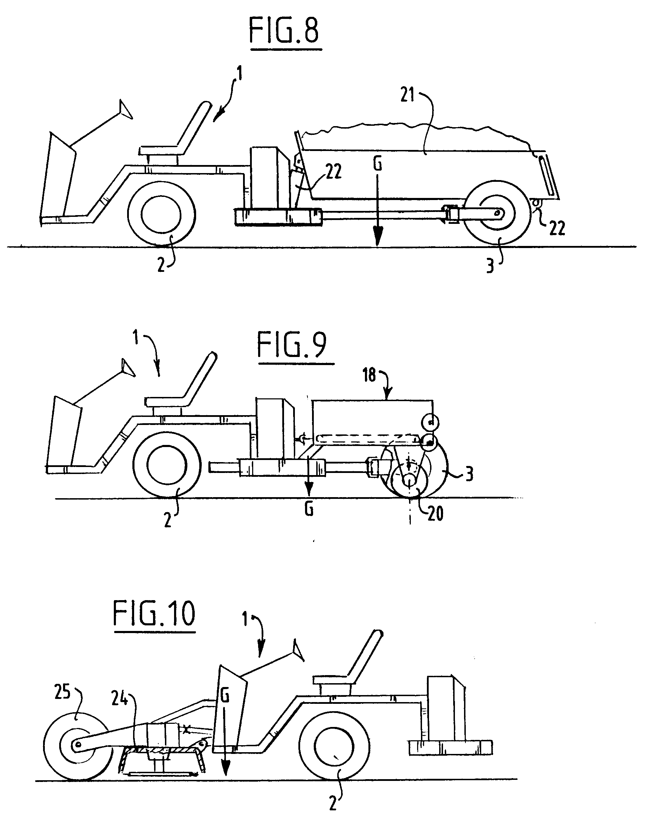

Fig. 8 shows an assembly of a motor vehicle 1 and a trailer 21 with tipping device 22. The displaceable wheels 3 are now placed such that the centre of gravity of the assembly lies practically above the middle of the wheel base, whereby the gravitational force G is distributed virtually uniformly over the wheels 2, 3.

Fig. 9 shows an assembly of the motor vehicle 1 and a clod-breaker 18. Because clod-breaker 18 is comparatively shorter than the trailer 21 shown in fig. 8, the centre of gravity of the assembly will be located more to the front than in the assembly of fig. 8. In order now to achieve that the centre of gravity of the assembly nevertheless lies practically above the middle of the wheel base so that the gravitational force G is distributed virtually uniformly over the wheels 2, 3, the wheel base is shorter in this situation than in the assembly shown in fig. 8.

Fig. 10 shows an assembly of the motor vehicle 1 and a mowing device 24. In this case the centre of gravity of the assembly lies, in contrast to the situation in the foregoing two figures, in front of the fixed wheels 2. It is necessary in this case to effect an additional support at the front, therefore in front of the fixed wheels 2. For this purpose the mowing device is provided with a wheel 25 which takes over the function of the displaceable wheels 3 of the foregoing figures 8 and 9. These wheels 3 therefore become superfluous.

## Claims

1. Motor vehicle (1) for propelling and/or driving agricultural implements and/or machines (17, 18, 21, 23, 24), comprising a frame (8), at least one coupling member (12) connected to the frame (8) for coupling of an agricultural implement and/or a machine (17, 18, 21, 23, 24) and at least three wheels (23, 25) each mounted on a shaft (4, 26), wherein at least one of the shafts (4) is displaceable substantially in the plane defined by the shafts (4, 26).

2. Motor vehicle (1) as claimed in claim 1, **characterized in that** at least one coupling member (12) lies within the perimeter defined by the shafts (4, 26).

3. Motor vehicle (1) as claimed in claim 1 or claim 2, **characterized in that** two shafts (26) are connected to the frame (8) at a fixed position.

4. Motor vehicle (1) as claimed in claim 3, **characterized in that** the two shafts (26) with fixed position are steerable.

5. Motor vehicle (1) as claimed in claim 3 or claim 4, **characterized in that** the two shafts (26) with fixed position are driven.

6. Motor vehicle (1) as claimed in any of the claims 1-5, **characterized in that** two shafts (4) are connectable to the frame (8) at an adjustable position.

7. Motor vehicle (1) as claimed in claim 6, **characterized in that** the two shafts (4) are located mutually in line.

8. Motor vehicle (1) as claimed in any of the claims 1-7, **characterized in that** at least one of the wheels (25) forms part of an agricultural implement and/or machine (17, 18, 21, 23, 24) connectable to the coupling member (12).

9. Motor vehicle (1) as claimed in claim 8, **characterized in that** the agricultural implement (23) is formed by a roller.
